# EUROPEAN PATENT APPLICATION

(11) **EP 4 825 897 A1**
(43) Date of publication of application: **21.10.2026**
(21) Application number: 25907671.9
(22) Date of filing: 02.09.2025
(51) Int. Cl.: C08J 3/24, C08J 3/12, C08J 9/20, C08J 9/14, C08F 220/06, C08F 2/44, C08K 3/36, C08K 9/10

(54) **ABSORBENT RESIN AND PREPARATION METHOD THEREFOR**

(30) Priority: 19.12.2024 KR 20240191641; 01.09.2025 KR 20250123284
(71) Applicant: LG Chem, Ltd., Seoul 07336 (KR)
(72) Inventor: LEE, Serin, Seoul 07796 (KR); CHO, Joonil, Seoul 07796 (KR); YANG, Seung Hun, Seoul 07796 (KR); JEE, Min Goo, Seoul 07796 (KR)
(74) Representative: Goddar, Heinz J.
(86) International application number: PCT/KR2025/013466
(87) International publication number: WO 2026/134534

(57) **Abstract**

The present invention can provide a polyacrylic acid (salt)-based absorbent resin, a preparation method therefor, and an article comprising the absorbent resin, the polyacrylic acid (salt)-based absorbent resin having an improved absorption rate and a reduced amount of fine particles generated relative to the achieved absorption rate, the improved absorption rate being due to the formation of appropriate pores in the absorbent resin as a result of using an encapsulated foaming agent, having a controlled average particle size in a predetermined range, during the preparation of a base resin.

## Description

### [TECHNICAL FIELD]

The present invention relates to a polyacrylic acid (salt)-based super absorbent polymer, a method for preparing the same, and an article comprising the super absorbent polymer, wherein an average pore size in the super absorbent polymer is controlled, various physical properties including absorption rate are improved, and an amount of fine particles generated is reduced relative to a fast absorption rate achieved, by using an encapsulated foaming agent having an average particle diameter adjusted to a predetermined range during preparation of a base resin.

### [BACKGROUND ART]

Super Absorbent Polymer (SAP) refers to a synthetic polymer material capable of absorbing moisture of about 500 to 1,000 times its own weight, and is named differently by each developer, such as SAM (Super Absorbency Material) and AGM (Absorbent Gel Material). Such super absorbent polymers began to be put to practical use as sanitary products, and are now widely used in various fields ranging from sanitary products such as paper diapers for children to soil water retaining agents for horticulture, water stopping materials for civil engineering and construction, sheets for raising seedlings, freshness preserving agents in the food distribution field, materials for fomentation, and electrical insulation.

The super absorbent polymer is widely used in the field of sanitary materials such as diapers and sanitary napkins. For these applications, high absorption capacity for moisture and the like, absorption capacity under pressure such that absorbed moisture does not escape even under external pressure, and fast absorption rate are required. However, in order for the super absorbent polymer to simultaneously improve high absorption capacity and absorption capacity under pressure, it is necessary to control the amount of fine particles generated to be low during preparation of the base resin.

Meanwhile, a technology using a foaming agent has been introduced to achieve a fast absorption rate of the super absorbent polymer, but when a fast absorption rate is formed thr ough such a foaming agent, there is a problem that the amount of fine particles generated incr eases in proportion to the increase in absorption rate.

### [PRIOR ART DOCUMENTS]

### [PATENT DOCUMENT]

(Patent Document 1) Korean Patent Publication No. 2018-0003815

### [SUMMARY OF THE INVENTION]

### [TECHNICAL PROBLEM]

The present invention has been made to solve the above-mentioned problems, and an object of the present invention is to provide a super absorbent polymer and a method for preparing the same, capable of achieving a fast absorption rate of the super absorbent polymer and simultaneously exhibiting an effect of reducing an amount of fine particles generated, by using an encapsulated foaming agent having an average particle diameter adjusted to a predetermined range during preparation of a base resin.

Another object of the present invention is to provide an article, such as a sanitary article like a diaper, which comprises the above-described super absorbent polymer and thus has excellent overall physical properties such as high absorption capacity and fast absorption rate, and can continuously exhibit comfort.

Other objects and advantages of the present invention will be more clearly described by the following detailed description of the invention and claims.

### [TECHNICAL SOLUTION]

To achieve the above technical object, the present invention provides a polyacrylic acid (salt)-based super absorbent polymer comprising a base resin and a surface cross-linking layer formed on a surface of the base resin, wherein:
based on 100 parts by weight of total super absorbent polymer particles, particles having an average particle diameter of 150 µm or more and less than 300 µm are included in an amount of 25 parts by weight or less;
a centrifugal retention capacity (CRC) measured according to EDANA WSP 241.2 is 36.0 g/g or more; and
an absorption rate for physiological saline measured according to a Vortex measurement method is 34 seconds or less.

The super absorbent polymer may have an absorbency under pressure (0.7 AUP) of 10.0 g/g or more for 1 hour under 0.7 psi for physiological saline (0.9 wt% sodium chloride aqueous solution) measured according to the method of EDANA WSP 242.3-10.

The super absorbent polymer may have a liquid permeability of 300 seconds or less.

The base resin may be formed by cross-linking polymerization of an acrylic acid-based monomer having at least a partially neutralized acidic group and an internal cross-linking agent in the presence of an encapsulated foaming agent having an average particle diameter (D50) of 4 to 10 µm.

The super absorbent polymer may further comprise a silica layer formed on the surface cross-linking layer.

In addition, the present invention provides an article comprising the above-described polyacrylic acid (salt)-based super absorbent polymer.

The article may be at least one selected from an absorbent article, a sanitary article, a soil water retaining agent, a water stopping material for civil engineering and construction, a sheet for raising seedlings, a freshness preserving agent, a material for fomentation, and an electrical insulator.

In addition, the present invention provides a method for preparing the above-described polyacrylic acid (salt)-based super absorbent polymer, specifically comprising the steps of: (i) cross-linking polymerizing an acrylic acid - based monomer having at least a partially neutralized acidic group in the presence of an encapsulated foaming agent having an average particle diameter (D50) of 4 to 10 µm, an internal cross-linking agent, and a polymerization initiator to form a hydrogel polymer; (ii) drying, pulverizing, and classifying the hydrogel polymer to obtain a base resin powder; and (iii) mixing a base resin, in which particles having an average particle diameter of 150 µm or more and less than 300 µm are included in an amount of 25 parts by weight or less based on 100 parts by weight of the obtained base resin powder, with a surface cross-linking composition containing a surface cross-linking agent, followed by heat treatment to prepare a super absorbent polymer having a surface cross-linking layer formed on the base resin.

The encapsulated foaming agent comprises a core containing a hydrocarbon; and a shell surrounding the core and formed of a thermoplastic resin, and may have an expansion initiation temperature of 90 to 100 °C.

The encapsulated foaming agent may be included in an amount of 100 to 3,000 ppmw based on 100 parts by weight of the acrylic acid-based monomer.

An amount of fine particles generated having a particle diameter of less than 150 µm based on 100% by weight of the total base resin powder pulverized in step (ii) may be 25% by weight or less.

The super absorbent polymer may have a Pulverizing Ratio (PR) according to the following Equation 1 of 750%·sec or less:

[Equation 1] $PR = {BR}_{FP} \times {PD}_{VT} \leq 750 ,$ wherein
BR_{FP} is a percentage of an amount of fine particles generated having a particle diameter of less than 150 *µ*m relative to 100% by weight of the total base resin powder pulverized in step (ii), and
PD_{VT} is an absorption rate for physiological saline according to a Vortex measurement method of the super absorbent polymer prepared in step (iii).

The super absorbent polymer may have a Foaming Efficiency (FE) according to the following Equation 2 of 37.0 or less. [Equation 2] $FE = {C}_{FA} + {PD}_{VT} \leq 37.0 ,$ wherein
C_{FA} is [content of encapsulated foaming agent used in step (i) (ppmw)] / 1000, and
PD_{VT} is an absorption rate for physiological saline according to a Vortex measurement method of the super absorbent polymer prepared in step (iii).

The preparation method may further comprise (iv) mixing the super absorbent polymer having the surface cross-linking layer formed thereon with silica.

The silica may be included in an amount of 0.01 to 5 parts by weight based on 100 parts by weight of the super absorbent polymer.

### [ADVANTAGEOUS EFFECTS]

The Super Absorbent Polymer (SAP) according to the present invention can simultaneously realize a fast Vortex absorption rate and excellent absorption capacity of the super absorbent polymer after surface cross-linking through formation of an appropriate pore structure by applying an encapsulated foaming agent having an average particle diameter adjusted to a predetermined range. In addition, it can exhibit an effect of reducing an amount of fine particles generated during preparation of the base resin.

Accordingly, when the super absorbent polymer is applied to sanitary articles such as diapers, it is possible to secure a more improved absorption rate while maintaining excellent basic absorption capacity, and to continuously exhibit comfort.

The effects according to the present invention are not limited to the contents exemplified above, and more diverse effects are included in the present specification.

### [MODE FOR THE INVENTION]

Hereinafter, the present invention will be described in detail.

Unless otherwise defined, all terms (including technical and scientific terms) used herein have the same meaning as commonly understood by one of ordinary skill in the art to which the present invention belongs. Also, terms such as those defined in commonly used dictionaries are not to be interpreted in an idealized or overly formal sense unless expressly so defined herein.

Throughout this specification, when a part is referred to as "including" a component, it should be understood as an open-ended term implying the possibility of further including other components, rather than excluding other components, unless otherwise stated.

In addition, the terms "preferred" and "preferably" as used herein refer to embodiments of the present invention that can provide certain advantages under certain circumstances. However, other embodiments may also be preferred under the same or different circumstances. Additionally, the mention of one or more preferred embodiments does not imply that other embodiments are not useful, nor is it intended to exclude other embodiments from the scope of the present invention.

Terms such as first, second, and third are used to describe various components, and these terms are used only for the purpose of distinguishing one component from another.

The term "polymer" or "macromolecule" as used herein refers to a state in which a water-soluble ethylenically unsaturated monomer is polymerized, and may encompass any moisture content range or particle size range. Among the above polymers, a polymer having a water content (moisture content) of about 40% by weight or more in a state after polymerization and before drying may be referred to as a "hydrogel polymer," and particles obtained by pulverizing and drying such a hydrogel polymer may be referred to as a "cross-linked polymer."

In addition, the term "base resin" or "base resin powder" as used herein refers to a polymer obtained by polymerizing an acrylic acid-based monomer, which is dried and pulverized into a particle or powder form, and refers to a polymer that has not undergone a surface modification or surface cross-linking step to be described later.

In addition, the term "Super Absorbent Polymer" or "super absorbent polymer particle" is used to encompass a cross-linked polymer in which water-soluble ethylenically unsaturated monomers (acrylic acid-based monomers) having acidic groups at least partially neutralized are polymerized, or a base resin in a powder form consisting of pulverized super absorbent polymer particles of the cross-linked polymer, or a state suitable for commercialization through additional processes such as surface cross-linking, fine particle reassembly, drying, pulverization, classification, etc., with respect to the cross-linked polymer or the base resin, depending on the context.

In addition, the term "fine particles" refers to particles having a particle diameter of less than 150 µm among the polymers, and may encompass all particles generated in any process of the super absorbent polymer, for example, a polymerization process, a drying process, a pulverization process of a dried polymer, or a surface cross-linking process, regardless of the step where the fine particles are generated or whether surface cross-linking is performed.

Since the present invention can be variously modified and have various forms, specific embodiments will be illustrated and described in detail below. However, this is not intended to limit the present invention to specific disclosed forms, and should be understood to include all modifications, equivalents, or substitutes included in the spirit and technical scope of the present invention.

Hereinafter, super absorbent polymer particles and a method for preparing the same will be described in more detail according to specific embodiments of the invention.

### <Super Absorbent Polymer>

An example of the present invention is a Super Absorbent Polymer (SAP) applied to sanitary articles such as diapers for infants/adults, and more specifically, is a polyacrylic acid (salt)-based super absorbent polymer in which a pore structure of an appropriate size is uniformly formed in the super absorbent polymer, and a fast absorption rate can be achieved through these pores.

Super Absorbent Polymer (SAP) fine particles are generally generated in pulverization (fine pulverization) and powdering process steps of a dried polymer. Such polymer fine particles move within a manufacturing apparatus before use, thereby causing a decrease in manufacturing yield and also causing deterioration in physical properties of the super absorbent polymer by exhibiting gel blocking after manufacturing. In addition, although a fast absorption rate of the super absorbent polymer may be realized through introduction of a foaming agent, in this case, there is a problem that an amount of fine particles generated increases in proportion to an increase in the absorption rate.

Accordingly, the present invention is characterized by using a foaming agent during preparation of the base resin, wherein an encapsulated foaming agent having an average particle diameter adjusted to a predetermined range is used as the foaming agent. Through this, in the present invention, appropriate and uniform pores can be formed in the super absorbent polymer, and excellent absorption capacity and a fast absorption rate of the super absorbent polymer can be achieved. In addition, in the present invention, an effect of reducing an amount of fine particles generated compared to a fast absorption rate (Vortex) realized by introduction of the foaming agent can be secured.

As one specific example, the super absorbent polymer is a polyacrylic acid (salt)-based super absorbent polymer comprising a base resin and a surface cross-linking layer formed on a surface of the base resin, and satisfies the following conditions (i) to (iii).
(i) based on 100 parts by weight of total super absorbent polymer particles, particles having an average particle diameter of 150 µm or more and less than 300 µm are included in an amount of 25 parts by weight or less,
(ii) a centrifugal retention capacity (CRC) measured according to EDANA WSP 241.2 is 36.0 g/g or more, and
(iii) an absorption rate for physiological saline according to a Vortex measurement method is 34 seconds or less.

Specifically, in the present invention, by adopting an encapsulated foaming agent having an average particle diameter of 4 to 10 µm during cross-linking polymerization of the base resin and applying the same while controlling a content thereof, an average pore size formed in a final super absorbent polymer can be uniformly controlled, and overall physical properties of SAP including a fast absorption rate and excellent absorption capacity can be improved.

In addition, conventionally, a method of lowering a particle size of super absorbent polymer powder was also taken to achieve a fast absorption rate. However, when the particle size of the super absorbent polymer powder is lowered in this way, there is a risk that process problems such as adhesion and flowability problems may occur in a manufacturing process of the super absorbent polymer or a process of an absorbent article (e.g., diaper) applying the super absorbent polymer. Accordingly, in the present invention, by limiting a content of fine particles (for example, average particle diameter of 150 µm or more and less than 300 µm) relative to total super absorbent polymer particles to a specific range or less, a fast absorption rate of the super absorbent polymer can be secured while minimizing the aforementioned process problems due to particle size reduction.

The super absorbent polymer may include particles having an average particle diameter of 150 µm or more and less than 300 µm in an amount of 25 parts by weight or less, and specifically 10 to 25 parts by weight, based on 100 parts by weight of total super absorbent polymer particles. For example, the super absorbent polymer particles having an average particle diameter of 150 µm or more and less than 300 µm may be included in an amount of 10 parts by weight or more, 11 parts by weight or more, 12 parts by weight or more, 13 parts by weight or more, 14 parts by weight or more, 15 parts by weight or more, 16 parts by weight or more, 17 parts by weight or more, 18 parts by weight or more, 19 parts by weight or more, or 20 parts by weight or more, or 25 parts by weight or less, 24 parts by weight or less, 23 parts by weight or less, or 22 parts by weight or less, based on 100 parts by weight of total super absorbent polymer particles. For example, the content of the super absorbent polymer particles having an average particle diameter of 150 µm or more and less than 300 µm may be 10 to 25 parts by weight, 11 to 25 parts by weight, 12 to 25 parts by weight, 13 to 25 parts by weight, 14 to 25 parts by weight, 15 to 25 parts by weight, 16 to 25 parts by weight, 17 to 25 parts by weight, 18 to 25 parts by weight, 19 to 25 parts by weight, or 20 to 25 parts by weight.

Here, a particle size ratio of particles having an average particle diameter of 150 µm or more and less than 300 µm may be controlled during preparation of the base resin, or it is also possible to control the particle size ratio of the super absorbent polymer after surface cross-linking.

As another example, the super absorbent polymer may have a centrifugal retention capacity (CRC) measured according to EDANA WSP 241.2 of 36.0 g/g or more, 36.1 g/g or more, or 36.2 g/g or more. At this time, a maximum value of the centrifugal retention capacity of the super absorbent polymer is not particularly limited.

As another example, the absorption rate for physiological saline according to the Vortex measurement method of the super absorbent polymer may be 34 seconds or less, 33.9 seconds or less, 33.8 seconds or less, 33.7 seconds or less, 33.6 seconds or less, 33.5 seconds or less, 33.4 seconds or less, 33.3 seconds or less, 33.2 seconds or less, 33.1 seconds or less, or 33 seconds or less. At this time, a minimum value of the absorption rate is not particularly limited. Here, Vortex refers to a time until a vortex of liquid disappears due to rapid absorption when the super absorbent polymer is added to physiological saline and stirred, and among required physical properties of the super absorbent polymer, the absorption rate is used as Vortex.

In addition to the content of particles having a predetermined particle diameter in the super absorbent polymer, centrifugal retention capacity, and absorption rate described above, the super absorbent polymer according to the present invention may further satisfy at least one or more of the following conditions (iv) and (v), and preferably satisfies both conditions (iv) and (v).

For example, (iv) the super absorbent polymer may have an absorbency under pressure (0.7 AUP) for 1 hour under 0.7 psi for physiological saline (0.9 wt% sodium chloride aqueous solution) measured according to the method of EDANA WSP 242.3-10 of 10.0 g/g or more, 11.0 g/g or more, 12.0 g/g or more, 13.0 g/g or more, or 14.0 g/g or more. At this time, a maximum value of the absorbency under pressure is not particularly limited.

As another example, (v) liquid permeability (permeability) of the super absorbent polymer may be 300 seconds or less, 290 seconds or less, 280 seconds or less, 270 seconds or less, 260 seconds or less, 250 seconds or less, or 240 seconds or less. Here, a minimum value of the liquid permeability is not particularly limited.

The polyacrylic acid (salt)-based super absorbent polymer according to the present invention comprises a base resin and a surface cross-linking layer formed on a surface of the base resin, wherein the base resin comprises a cross-linked polymer formed by cross-linking polymerization of an acrylic acid-based monomer having at least a partially neutralized acidic group and an internal cross-linking agent in the presence of an encapsulated foaming agent having an average particle diameter (D50) of 4 to 10 µm. The encapsulated foaming agent is composed of a core containing a hydrocarbon and a polymer shell surrounding the core, and through foaming, the hydrocarbon as the core is vaporized, and the polymer shell remains in the super absorbent polymer to form a uniform and fine pore structure.

The acrylic acid-based monomer may be any monomer commonly used in preparation of a super absorbent polymer. Specifically, the acrylic acid-based monomer may be a compound represented by the following Formula 1:

[Formula 1] R₁ -COOM₁,

wherein
R₁ is an alkyl group having 2 to 5 carbon atoms including an unsaturated bond, and
M₁ is a hydrogen atom, a monovalent or divalent metal, an ammonium group, or an organic amine salt.

Preferably, the acrylic acid-based monomer includes at least one selected from the group consisting of acrylic acid, methacrylic acid, and monovalent metal salts, divalent metal salts, ammonium salts, and organic amine salts thereof.

The acrylic acid-based monomer has an acidic group, and at least a part of the acidic group may be neutralized. Specifically, the monomer partially neutralized with an alkali substance such as sodium hydroxide, potassium hydroxide, or ammonium hydroxide may be used. In this case, a degree of neutralization of the monomer may be 40 to 95 mol%, or 50 to 80 mol%, or 60 to 75 mol%. The range of the degree of neutralization may vary depending on final physical properties, but if the degree of neutralization is excessively high, neutralized monomers may precipitate, making it difficult for polymerization to proceed smoothly, and conversely, if the degree of neutralization is excessively low, not only absorbency of the polymer may significantly drop, but also properties like elastic rubber difficult to handle may be exhibited.

An internal cross-linking agent is a term used to distinguish from a surface cross-linking agent to be described later for cross-linking the surface of the base resin, and plays a role of cross-linking and polymerizing unsaturated bonds of the acrylic acid-based monomers. Cross-linking in the above step proceeds without distinction between surface or inside, but by a surface cross-linking process of the base resin to be described later, a particle surface of the finally prepared super absorbent polymer consists of a structure cross-linked by a surface cross-linking agent, and an inside consists of a structure cross-linked by the internal cross-linking agent.

The internal cross-linking agent may include any one or more of conventional multifunctional acrylate-based compounds, multifunctional allyl-based compounds, multifunctional glycidyl ether-based compounds, or multifunctional vinyl-based compounds known in the art.

Non-limiting examples of usable multifunctional acrylate-based compounds include ethylene glycol di(meth)acrylate, diethylene glycol di(meth)acrylate, triethylene glycol di(meth)acrylate, tetraethylene glycol di(meth)acrylate, polyethylene glycol di(meth)acrylate, propylene glycol di(meth)acrylate, tripropylene glycol di(meth)acrylate, polypropylene glycol di(meth)acrylate, butanediol di(meth)acrylate, butylene glycol di(meth)acrylate, hexanediol di(meth)acrylate, pentaerythritol di(meth)acrylate, pentaerythritol tri(meth)acrylate, pentaerythritol tetra(meth)acrylate, dipentaerythritol di(meth)acrylate, dipentaerythritol tri(meth)acrylate, dipentaerythritol tetra(meth)acrylate, dipentaerythritol penta(meth)acrylate, trimethylolpropane di(meth)acrylate, trimethylolpropane tri(meth)acrylate, glycerin di(meth)acrylate, glycerin tri(meth)acrylate, etc., and these may be used alone or by mixing two or more.

In addition, non-limiting examples of usable multifunctional allyl-based compounds include ethylene glycol diallyl ether, diethylene glycol diallyl ether, triethylene glycol diallyl ether, tetraethylene glycol diallyl ether, polyethylene glycol diallyl ether, propylene glycol diallyl ether, tripropylene glycol diallyl ether, polypropylene glycol diallyl ether, butanediol diallyl ether, butylene glycol diallyl ether, hexanediol diallyl ether, pentaerythritol diallyl ether, pentaerythritol triallyl ether, pentaerythritol tetraallyl ether, dipentaerythritol diallyl ether, dipentaerythritol triallyl ether, dipentaerythritol tetraallyl ether, dipentaerythritol pentaallyl ether, trimethylolpropane diallyl ether, trimethylolpropane triallyl ether, glycerin diallyl ether, glycerin triallyl ether, etc., and these may be used alone or by mixing two or more.

Preferably, non-limiting examples of usable multifunctional glycidyl ether-based compounds further include ethylene glycol diglycidyl ether, polyethylene glycol diglycidyl ether, propylene glycol diglycidyl ether, polypropylene glycol diglycidyl ether, and the like, which may be used alone or in a mixture of two or more. Specifically, ethylene glycol diglycidyl ether may be used.

In addition, non-limiting examples of usable multifunctional vinyl-based compounds include ethylene glycol divinyl ether, diethylene glycol divinyl ether, triethylene glycol divinyl ether, tetraethylene glycol divinyl ether, polyethylene glycol divinyl ether, propylene glycol divinyl ether, tripropylene glycol divinyl ether, polypropylene glycol divinyl ether, butanediol divinyl ether, butylene glycol divinyl ether, hexanediol divinyl ether, pentaerythritol divinyl ether, pentaerythritol trivinyl ether, pentaerythritol tetravinyl ether, dipentaerythritol divinyl ether, dipentaerythritol trivinyl ether, dipentaerythritol tetravinyl ether, dipentaerythritol pentavinyl ether, trimethylolpropane divinyl ether, trimethylolpropane trivinyl ether, glycerin divinyl ether, glycerin trivinyl ether, etc., and these may be used alone or by mixing two or more.

In the present invention, an amount of the internal cross-linking agent used is not particularly limited, and may be appropriately adjusted within a range known in the art. For example, the internal cross-linking agent may be included in an amount of 0.01 to 1 part by weight, specifically 0.03 to 0.15 parts by weight, relative to 100 parts by weight of the monomer composition including the acrylic acid-based monomer. When a concentration of the internal cross-linking agent is excessively low, cross-linking may not sufficiently occur, making it difficult to realize strength above an appropriate level, and drying efficiency may be significantly reduced. In addition, when a concentration of the internal cross-linking agent is excessively high, internal cross-linking density increases, making it difficult to realize desired retention capacity.

Cross-linking polymerization of the acrylic acid-based monomer in the presence of such an internal cross-linking agent may be performed in the presence of a polymerization initiator, and if necessary, a thickener, a plasticizer, a storage stabilizer, an antioxidant, and the like.

The super absorbent polymer according to the present invention includes a surface cross-linking layer formed on a surface of a base resin, and in which the cross-linked polymer is additionally cross-linked via a surface cross-linking agent.

The surface cross-linking layer is formed by additionally cross-linking the cross-linked polymer via a surface cross-linking agent, wherein the surface cross-linking agent is not particularly limited as long as it is a surface cross-linking agent generally used for surface cross-linking of a super absorbent polymer and is a compound capable of reacting with a functional group of the polymer.

Non-limiting examples of usable surface cross-linking agents include one or more selected from the group consisting of monofunctional or polyfunctional glycidyl ether-based compounds; polyhydric alcohol compounds; epoxy compounds; polyamine compounds; haloepoxy compounds; condensation products of haloepoxy compounds; oxazoline compounds; mono-, di- or polyoxazolidinone compounds; cyclic urea compounds; polyvalent metal salts; and alkylene carbonate compounds. The surface cross-linking agent may be the same as or different from the aforementioned internal cross-linking agent without limitation.

Non-limiting examples of usable glycidyl ether-based compounds include ethylene glycol diglycidyl ether, polyethylene glycol diglycidyl ether, propylene glycol diglycidyl ether, polypropylene glycol diglycidyl ether, etc., and these may be used alone or by mixing two or more. Specifically, ethylene glycol diglycidyl ether may be used.

In addition, non-limiting examples of usable polyhydric alcohol compounds include one or more selected from the group consisting of mono-, di-, tri-, tetra- or polyethylene glycol, monopropylene glycol, 1,3-propanediol, dipropylene glycol, 2,3,4-trimethyl-1,3-pentanediol, polypropylene glycol, glycerol, polyglycerol, 2-butene-1,4-diol, 1,4-butanediol, 1,3-butanediol, 1,5-pentanediol, 1,6-hexanediol, and 1,2-cyclohexane dimethanol. And, non-limiting examples of haloepoxy compounds include epichlorohydrin, epibromohydrin, and α-methylepichlorohydrin. In addition, examples of mono-, di- or polyoxazolidinone compounds include 2-oxazolidinone. And, examples of alkylene carbonate compounds include ethylene carbonate. These may be used individually or in combination with each other. Meanwhile, in order to increase efficiency of a surface cross-linking process, one or more polyhydric alcohol compounds having 2 to 10 carbon atoms may be included and used among these surface cross-linking agents.

The surface cross-linking agent is included in the super absorbent polymer by being introduced into the surface cross-linking layer through cross-linking polymerization with the base resin. The content of such a surface cross-linking agent may be 0.01 to 10 parts by weight based on 100 parts by weight of the base resin, and specifically, 0.03 to 0.1 parts by weight. When the surface cross-linking agent is included in the above-described content range, absorption properties under pressure can be improved during surface cross-linking.

Meanwhile, the surface cross-linking layer may further include a conventional inorganic material known in the art. Non-limiting examples of usable inorganic materials include at least one inorganic material selected from the group consisting of silica, clay, alumina, silica-alumina composites, titania, zinc oxide, and aluminum sulfate. Such inorganic materials may be used in a powder form or a liquid form, and in particular, alumina powder, silica-alumina powder, titania powder, or a nano-silica solution may be used. Such inorganic materials may be used in an amount of about 0.001 to about 1 part by weight based on 100 parts by weight of the base resin, but the amount is not particularly limited thereto.

In addition, the surface cross-linking agent may further include a thickener. As described above, when the surface of the base resin powder is additionally cross-linked in the presence of the thickener, deterioration of physical properties can be minimized even after pulverization. As the usable thickener, at least one selected from polysaccharides and hydroxy-containing polymers may be used. As the polysaccharides, gum-based thickeners and cellulose-based thickeners may be used. Specific examples of the gum-based thickeners include xanthan gum, arabic gum, karaya gum, tragacanth gum, ghatti gum, guar gum, locust bean gum, and psyllium seed gum. Specific examples of the cellulose-based thickeners include hydroxypropylmethylcellulose, carboxymethylcellulose, methylcellulose, hydroxymethylcellulose, hydroxyethylcellulose, hydroxypropylcellulose, hydroxyethylmethylcellulose, hydroxymethylpropylcellulose, hydroxyethylhydroxypropylcellulose, ethylhydroxyethylcellulose, and methylhydroxypropylcellulose.

The super absorbent polymer according to the present invention may further include a silica layer formed on the surface cross-linking layer.

Physical properties of such a silica layer may affect liquid permeability, retention capacity, and absorption rate of the super absorbent polymer. Specifically, hydrophobicity or hydrophilicity of a silica surface affects the liquid permeability, water content, and binding force of silica to the super absorbent polymer, and thus the above-described effects can be further improved by controlling these physical properties. As the silica, hydrophilic fumed silica may be used, and for example, it may have a BET of 175 to 225 m²/g and a pH of 3.7 to 4.5. However, it is not limited thereto.

### <Method for Preparation of Super Absorbent Polymer>

Another example of the present invention is a method for preparing a polyacrylic acid (salt)-based super absorbent polymer (SAP).

Such a super absorbent polymer may be prepared according to a conventional method known in the art, except that an encapsulated foaming agent having an average particle diameter adjusted to a predetermined range and a content thereof are controlled and applied during preparation of the base resin.

Hereinafter, a method for preparing a super absorbent polymer according to the present invention will be described. However, it is not limited only to the following preparation method, and steps of each process may be modified or selectively mixed and performed as necessary.

As an example of the preparation method, it may comprise: (i) a first step of cross-linking polymerizing an acrylic acid-based monomer having at least a partially neutralized acidic group in the presence of an encapsulated foaming agent having an average particle diameter (D50) of 4 to 10 µm, an internal cross-linking agent, and a polymerization initiator to form a hydrogel polymer; (ii) a second step of drying, pulverizing, and classifying the hydrogel polymer to obtain a base resin powder; and (iii) a third step of mixing a base resin, in which particles having an average particle diameter of 150 µm or more and less than 300 µm are included in an amount of 25 parts by weight or less based on 100 parts by weight of the obtained base resin powder, with a surface cross-linking composition containing a surface cross-linking agent, followed by heat treatment to prepare a super absorbent polymer having a surface cross-linking layer formed on the base resin.

Hereinafter, each step will be described in more detail as follows.

### (i) Step of Preparing Hydrogel Polymer

The first step is a step of preparing a hydrogel polymer, and specifically, is a step of forming the hydrogel polymer by cross-linking polymerizing a monomer composition including an acrylic acid-based monomer having at least a partially neutralized acidic group and an internal cross-linking agent in the presence of an encapsulated foaming agent having an average particle diameter of 10 µm or less

The foaming agent serves to increase a surface area of the hydrogel polymer by forming pores in the hydrogel polymer through foaming in a monomer mixture during polymerization. Conventionally, carbonate-based inorganic foaming agents were used, or even when encapsulated foaming agents were used, foaming agents having an average particle diameter exceeding 10 µm (for example, 12 to 13 µm) were mainly used. In particular, conventionally, a method of increasing an amount of the foaming agent was mainly used to implement a fast Vortex, but as the amount of the foaming agent used increased, an amount of fine particles increased during a manufacturing process, resulting in a decrease in manufacturing yield and/or deterioration in physical properties of the super absorbent polymer.

In contrast, the present invention is differentiated from the prior art in that by using an encapsulated foaming agent having an average particle diameter (D50) of 4 to 10 µm as a foaming agent of the monomer composition, a fast Vortex and a small amount of fine particles, which are in a trade-off relationship, are simultaneously improved. Specifically, when foaming using a foaming agent in a manufacturing process of the Super Absorbent Polymer (SAP), the amount of generated fine particles is proportional to the Vortex. For example, as the amount of generated fine particles increases, an absorption rate becomes faster (for example, Vortex time decreases), and as the amount of generated fine particles decreases, the absorption rate becomes slower (for example, Vortex time increases). In the present invention, by controlling and applying the average particle diameter and content of the encapsulated foaming agent, it is possible to achieve a fast Vortex of 34 seconds or less and relatively reduce the amount of fine particles having a particle diameter of less than 150 µm generated in a classification process relative to the realized Vortex (see Table 1 below).

The encapsulated foaming agent has an average particle diameter (D50) before foaming, specifically, an average diameter measured before expansion, of 4 to 10 µm. Specifically, it may be 4.0 µm or more, 4.5 µm or more, 5.0 µm or more, 5.5 µm or more, 6.0 µm or more, 6.5 µm or more, 7.0 µm or more, 7.5 µm or more, or 8.0 µm or more, or may be 10.0 µm or less, 9.5 µm or less, or 9.0 µm or less. For example, the average particle diameter (D50) of the encapsulated foaming agent may be 4 to 10 µm, 5 to 10 µm, 5.5 to 9.5 µm, or 6 to 9 µm. When the foaming agent having the above-described diameter is used, the amount of fine particles generated during the manufacturing process can be reduced. In addition, super absorbent polymer particles having uniformly controlled pores of a predetermined size and a developed porous structure can be included in a high content in the super absorbent polymer.

The encapsulated foaming agent may have a structure including a core containing a hydrocarbon; and a shell surrounding the core and formed of a thermoplastic resin. Since such an encapsulated foaming agent can be expanded to a desired size, it is used in the preparation of the super absorbent polymer to facilitate control of the amount of fine particles generated.

The hydrocarbon constituting the core of the encapsulated foaming agent may be at least one selected from the group consisting of n-propane, n-butane, iso-butane, cyclobutane, n-pentane, iso-pentane, cyclopentane, n-hexane, iso-hexane, cyclohexane, n-heptane, isoheptane, cycloheptane, n-octane, iso-octane, and cyclooctane. Among them, hydrocarbons having 3 to 5 carbon atoms (n-propane, n-butane, iso-butane, cyclobutane, n-pentane, iso-pentane, cyclopentane) are suitable for forming pores of the above-described size.

In addition, the thermoplastic resin constituting the shell of the encapsulated foaming agent may be a polymer formed from at least one monomer selected from the group consisting of (meth)acrylate, (meth)acrylonitrile, aromatic vinyl, vinyl acetate, vinyl halide, and vinylidene halide. Among them, a copolymer of (meth)acrylate and (meth)acrylonitrile is suitable for forming pores of the above-described size.

In addition to the aforementioned average particle diameter, it is more advantageous from the viewpoint of controlling the amount of fine particles generated to simultaneously control at least one or more of an expansion initiation temperature, a maximum expansion size, and/or a moisture content of the encapsulated foaming agent.

As one specific example, the encapsulated foaming agent may have an expansion initiation temperature of 90 to 100 °C, specifically 91 to 99 °C, and more specifically 92 to 98 °C. In addition, a maximum foaming temperature (Tmax) of the encapsulated foaming agent may be 110 to 120 °C, specifically 110.5 to 119.5 °C, and more specifically 111 to 119 °C. Here, the expansion initiation temperature (Ts) and maximum foaming temperature (Tmax) of the encapsulated foaming agent are assumed to be measured by a Thermomechanical Analyzer (TMA). And the moisture content of the encapsulated foaming agent may be less than 2%, specifically 1.99% or less, and more specifically 1.95% or less. Here, the moisture content of the encapsulated foaming agent may be measured by analyzing a heating loss at a temperature equal to or lower than the expansion initiation temperature of the foaming agent using a convection oven conventional in the art, and may also be analyzed by a moisture meter which is an analysis equipment.

The encapsulated foaming agent may be included in an amount of 100 to 3,000 ppmw, preferably 200 to 3,000 ppmw, more preferably 300 to 3,000 ppmw, and even more preferably 500 to 3,000 ppmw, based on 100 parts by weight of the acrylic acid-based monomer. Within the above-described content range, a base resin and a super absorbent polymer satisfying the above-described pore characteristics and overall physical properties can be appropriately obtained.

The acrylic acid-based monomer included in the monomer composition according to the present invention may be any monomer commonly used in preparation of a super absorbent polymer. Specifically, the contents described above may be equally applied to the acrylic acid-based monomer.

The monomer composition may include a polymerization initiator generally used in preparation of a super absorbent polymer. As such a polymerization initiator, a thermal polymerization initiator or a photopolymerization initiator may be used depending on a polymerization method. However, even in the case of a photopolymerization method, a certain amount of heat is generated by ultraviolet irradiation and the like, and a certain degree of heat is generated as a polymerization reaction, which is an exothermic reaction, proceeds, so a thermal polymerization initiator may be additionally included.

Non-limiting examples of usable photopolymerization initiators include one or more compounds selected from the group consisting of benzoin ether, dialkyl acetophenone, hydroxyl alkylketone, phenyl glyoxylate, benzyl dimethyl ketal, acyl phosphine, and alpha-aminoketone. In addition, as the thermal polymerization initiator, one or more compounds selected from the group consisting of persulfate-based initiators, azo-based initiators, hydrogen peroxide, and ascorbic acid may be used.

An amount of the polymerization initiator used is not particularly limited, and for example, may be added at a concentration of 0.001 to 1% by weight, or 0.005 to 0.1% by weight, based on the monomer composition. That is, when the concentration of the polymerization initiator is excessively low, a polymerization rate may become slow and a large amount of residual monomer may be extracted in a final product, which is not preferable. Conversely, when the concentration of the polymerization initiator is excessively high, a polymer chain forming a network becomes short, which may cause deterioration in physical properties of a resin such as an increase in content of water-soluble components and a decrease in absorbency under pressure.

Meanwhile, polymerization of the monomer composition is performed in the presence of an internal cross-linking agent in order to improve physical properties of a resin by polymerization of the acrylic acid-based monomer. The contents described above may be equally applied to the internal cross-linking agent.

If necessary, the monomer composition may further include a conventional foaming agent known in the art different from the encapsulated foaming agent described above.

Non-limiting examples of usable foaming agents include at least one compound selected from the group consisting of sodium bicarbonate, sodium carbonate, potassium bicarbonate, potassium carbonate, calcium bicarbonate, calcium carbonate, magnesium bicarbonate, magnesium carbonate, azodicarbonamide (ADCA), dinitroso pentamethylene tetramine (DPT), p,p'-oxybis(benzenesulfonyl hydrazide) (OBSH), p-toluenesulfonyl hydrazide (TSH), sucrose stearate, sucrose palmitate, and sucrose laurate.

If necessary, the monomer composition may further include additives such as a thickener, a plasticizer, a storage stabilizer, and an antioxidant.

In addition, such a monomer composition may be prepared in a form of a solution in which raw materials such as the aforementioned acrylic acid-based monomer, polymerization initiator, internal cross-linking agent, DTPA, and foaming agent are dissolved in a solvent.

The solvent is not particularly limited as long as it can dissolve the aforementioned raw materials. Non-limiting examples of usable solvents include water, ethanol, ethylene glycol, diethylene glycol, triethylene glycol, 1,4-butanediol, propylene glycol, ethylene glycol monobutyl ether, propylene glycol monomethyl ether, propylene glycol monomethyl ether acetate, methyl ethyl ketone, acetone, methyl amyl ketone, cyclohexanone, cyclopentanone, diethylene glycol monomethyl ether, diethylene glycol ethyl ether, toluene, xylene, butyrolactone, carbitol, methyl cellosolve acetate, N,N-dimethylacetamide, or mixtures thereof.

Formation of a hydrogel polymer through polymerization of the monomer composition may be performed by a conventional polymerization method, and the process is not particularly limited.

Such a polymerization method is largely divided into thermal polymerization and photopolymerization depending on a type of a polymerization energy source. When thermal polymerization is performed, it may be performed in a reactor having a stirring shaft such as a kneader, and when photopolymerization is performed, it may be performed in a reactor equipped with a movable conveyor belt. For example, the hydrogel polymer may be obtained by introducing the monomer composition into a reactor such as a kneader equipped with a stirring shaft and supplying hot air thereto or heating the reactor to perform thermal polymerization. At this time, depending on a shape of the stirring shaft provided in the reactor, the hydrogel polymer discharged to a reactor outlet may be obtained as particles of several millimeters to several centimeters. Specifically, the obtained hydrogel polymer may be obtained in various forms depending on a concentration and an injection speed of the injected monomer composition and the like, and typically, a hydrogel polymer having a (weight average) particle diameter of 2 to 50 mm may be obtained.

As another example, when photopolymerization is performed on the monomer composition in a reactor equipped with a movable conveyor belt, a sheet-shaped hydrogel polymer can be obtained. In this case, a thickness of the sheet may vary depending on a concentration and an injection speed of the injected monomer composition, but it is typically preferable to adjust the thickness to 0.5 to 10 cm in order to ensure that the entire sheet is evenly polymerized while securing a production speed and the like.

The hydrogel polymer formed by such a method may exhibit a moisture content of 40 to 80% by weight. Here, the moisture content is a weight occupied by moisture in the total weight of the hydrogel polymer, and may be a value obtained by subtracting the weight of a dried polymer from the weight of the hydrogel polymer. Specifically, it may be defined as a value calculated by measuring a weight loss due to moisture evaporation in the polymer during a process of drying by raising a temperature of the polymer through infrared heating. At this time, drying conditions may be set to a total drying time of 20 minutes including 5 minutes of a temperature rising step by raising a temperature from room temperature to about 180 °C and then maintaining it at 180 °C.

### (ii) Step of Preparing Base Resin

The second step is a step of preparing a base resin by drying and pulverizing the hydrogel polymer prepared in the first step.

The second step may further include a step of coarsely pulverizing the hydrogel polymer before drying the hydrogel polymer in order to increase drying efficiency of the hydrogel polymer as well as improve an absorption rate of the super absorbent polymer. In the present invention, the term 'coarse pulverization' is used for convenience for pulverization before drying to distinguish it from pulverization after drying.

A pulverizer used for coarse pulverization is not particularly limited, and specifically, any one selected from the group of pulverizing devices consisting of a vertical pulverizer, a turbo cutter, a turbo grinder, a rotary cutter mill, a cutter mill, a disc mill, a shred crusher, a crusher, a chopper, and a disc cutter may be used. Such a coarse pulverization step may pulverize so that a particle diameter of the hydrogel polymer becomes about 2 mm to about 10 mm.

A drying process may be performed according to methods and conditions known in the art, and for example, may be performed at a temperature of 120 to 250 °C, 140 to 200 °C, or 150 to 190 °C. In addition, a drying time is not particularly limited, but may be adjusted to 20 minutes to 90 minutes under the drying temperature in consideration of process efficiency and physical properties of the resin.

The drying process may be performed using a conventional medium, and for example, may be performed through a method such as hot air supply, infrared irradiation, microwave irradiation, or ultraviolet irradiation on the pulverized hydrogel polymer.

In addition, the drying process is preferably performed so that the dried polymer has a moisture content of 0.1 to 10% by weight. That is, if the moisture content of the dried polymer is less than 0.1% by weight, it is not preferable because an increase in manufacturing cost due to excessive drying and degradation of the cross-linked polymer may occur. In addition, if the moisture content of the dried polymer exceeds 10% by weight, defects may occur in a subsequent process, which is not preferable.

Subsequently, the dried hydrogel polymer may be pulverized, which is a step for optimizing surface areas of the base resin and the super absorbent polymer. Such pulverization may be performed so that a particle diameter of the pulverized polymer becomes 150 to 850 µm. At this time, as a usable pulverizer, a conventional one such as a pin mill, a hammer mill, a screw mill, a roll mill, a disc mill, or a jog mill may be used.

In addition, in order to manage physical properties of the super absorbent polymer to be finally commercialized, polymer particles obtained through the pulverization step may be subjected to a classification step of sorting fine particles having a particle diameter of less than 150 µm and normal particles having a particle diameter of 150 µm or more and 850 µm or less to obtain a base resin powder.

At this time, in the present invention, by using an encapsulated foaming agent having an average particle diameter of 4 to 10 µm, an amount of fine particles generated having a particle diameter of less than 150 µm relative to 100% of the entire pulverized base resin powder can be controlled to 25% or less, specifically 24.5% or less, and more specifically 24% or less.

If necessary, the present invention may further include a step of reassembling the classified fine particles to form reassembled bodies having a particle diameter of 150 to 850 µm. This reassembly process is not particularly limited, and a conventional process known in the art may be performed.

A base resin may be obtained through the aforementioned drying, pulverizing, and classifying steps. Such a base resin may have a particle diameter of 150 to 850 µm, and may include fine particles having a particle diameter of less than 150 µm in an amount of 2% by weight or less, or 1% by weight or less.

### (iii) Step of Forming Surface Cross-linking Layer

The third step is a step of preparing a super absorbent polymer having a surface cross-linking layer formed on a surface of the base resin by mixing a surface cross-linking composition with the base resin obtained in the second step, and then heat-treating the mixture.

In this case, in the present invention, surface cross-linking is performed after adjusting so that particles having an average particle diameter of 150 µm or more and less than 300 µm are included in an amount of 25 parts by weight or less, preferably 10 to 25 parts by weight, and more preferably 15 to 25 parts by weight, based on 100 parts by weight of the obtained base resin powder. For example, surface cross-linking may be performed by mixing a first base resin (BR1) having a particle size of 600 to 850 µm, a second base resin (BR2) having a particle size of 300 µm or more and less than 600 µm, and a third base resin (BR3) powder having a particle size of 150 µm or more and less than 300 µm in a predetermined ratio based on a particle size of the base resin obtained by classification. In this case, a mixing ratio of the first base resin (BR1), the second base resin (BR2), and the third base resin (BR3) may be, for example, a weight ratio of BR1 : BR2 : BR3 = 10 to 25 : 50 to 80 : 10 to 25.

The surface cross-linking agent is not particularly limited as long as it is a compound capable of reacting with a functional group of the polymer as a surface cross-linking agent generally used for surface cross-linking of the super absorbent polymer. Since the above-described contents may be equally applied to such a surface cross-linking agent, a separate description thereof will be omitted.

The surface cross-linking composition may further include an inorganic material to perform the step of forming the surface cross-linking layer.

As such an inorganic material, at least one inorganic material selected from the group consisting of silica, clay, alumina, silica-alumina composite, titania, zinc oxide, and aluminum sulfate may be used. The inorganic material may be used in a powder form or a liquid form, and in particular, alumina powder, silica-alumina powder, titania powder, or a nano-silica solution may be used. In addition, the inorganic material may be used in an amount of about 0.001 to about 1 part by weight based on 100 parts by weight of the base resin.

In addition, the surface cross-linking composition may further include a thickener. If the surface of the base resin powder is additionally cross-linked in the presence of the thickener in this way, deterioration of physical properties may be minimized even after pulverization.

Meanwhile, a method of mixing the surface cross-linking composition with the base resin is not particularly limited as long as it is a method capable of evenly mixing them with the base resin, and may be appropriately adopted and used. As a usable mixing method, a method of putting the surface cross-linking composition into a base resin reaction tank and mixing, a method of spraying the surface cross-linking composition onto the base resin, a method of continuously supplying the base resin and the surface cross-linking composition to a continuously operated mixer and mixing, or the like may be used.

In this case, the surface cross-linking composition may be a solution, and when a solid content in the solution is 1% by weight or more, 3% by weight or more, 5% by weight or more, 10% by weight or more, or 50% by weight or less, 30% by weight or less, or 20% by weight or less, it is suitable for being evenly dispersed in the base resin, and at the same time, agglomeration of the base resin may be prevented.

When the above-described base resin and surface cross-linking composition are mixed and heat-treated, an interpenetrating polymer network is formed on a surface of the cross-linked polymer included in the base resin, thereby further improving physical properties of the super absorbent polymer. That is, a surface cross-linking layer is formed on the surface of the pulverized base resin particles through such surface modification.

Formation of such a surface cross-linking layer may be performed by a conventional method of increasing a cross-linking density of a surface of polymer particles. For example, it may be performed by a method of mixing a surface cross-linking composition solution containing a surface cross-linking agent and the pulverized polymer, and heat-treating the mixture to cause a cross-linking reaction.

A heat treatment temperature of the surface cross-linking process may be performed at a temperature of about 80 °C to about 250 °C. More specifically, it may be performed at a temperature of about 100 °C to about 220 °C, or about 110 °C to about 200 °C, or about 120 °C to about 190 °C, for about 10 minutes to about 2 hours, or about 20 minutes to about 60 minutes.

### (iv) Step of Forming Silica Layer

If necessary, the present invention may further include a fourth step of mixing the super absorbent polymer having the surface cross-linking layer formed thereon with silica.

Such silica may be used in an amount of 0.01 to 5 parts by weight based on 100 parts by weight of the super absorbent polymer, preferably 0.03 to 3 parts by weight, and more preferably 0.05 to 1 part by weight. However, it is not particularly limited thereto, and may be appropriately adjusted within a conventional range known in the art.

Meanwhile, a fast Vortex and a small amount of fine particles correspond to a trade-off relationship in the super absorbent polymer. For example, when the amount of the foaming agent is increased to implement a fast Vortex, the amount of fine particles increases during the manufacturing process, and when the amount of the foaming agent used is reduced, the amount of generated fine particles decreases, but the Vortex becomes slow. Accordingly, conventionally, either a fast Vortex or a low amount of generated fine particles could be achieved, but it was difficult to implement them simultaneously.

In contrast, in the present invention, by optimizing the average particle diameter and content of the encapsulated foaming agent, a fast Vortex and a small amount of fine particles corresponding to the conventional trade-off relationship can be secured simultaneously. In fact, in the present invention, an amount of generated fine particles of 25% by weight or less and a fast Vortex of 34 seconds or less can be achieved simultaneously.In the present invention, a Pulverizing Ratio (PR) represented by Equation 1 below is newly introduced in order to effectively represent the amount of generated fine particles compared to the implemented fast Vortex.

Specifically, the super absorbent polymer may have a Pulverizing Ratio (PR) according to Equation 1 below of 750 %·sec or less, 740 %·sec or less, 730 %·sec or less, 720 %·sec or less, 710 %·sec or less, 700 %·sec or less, 690 %·sec or less, or 680 %·sec or less. At this time, a lower limit of the Pulverizing Ratio is not particularly limited. [Equation 1] $PR = {BR}_{FP} \times {PD}_{VT} \leq 750 ,$ wherein
BR_{FP} is a percentage of an amount of generated fine particles having a particle diameter of less than 150 µm based on 100% by weight of the base resin powder pulverized in step (ii), and
PD_{VT} is an absorption rate for physiological saline according to a Vortex measurement method of the super absorbent polymer prepared in step (iii).

The Pulverizing Ratio (PR) newly introduced in the present invention is a value obtained by multiplying the amount of generated fine particles during preparation of the super absorbent polymer by the Vortex speed of the prepared super absorbent polymer. Since the numerical value of the aforementioned Pulverizing Ratio (PR) can have a low value only when both a low amount of generated fine particles and a fast Vortex, which are in a trade-off relationship, are satisfied simultaneously, it is a new evaluation parameter differentiated from the prior art. At this time, a lower limit of the Pulverizing Ratio is not particularly limited.

In addition, in the present invention, through the use of the encapsulated foaming agent having an average particle diameter adjusted to a specific range and control of its content, a super absorbent polymer in which a pore structure suitable for securing a fast Vortex is uniformly formed can be prepared. In particular, in the present invention, by using the encapsulated foaming agent having an average particle diameter of 4 to 10 µm, a synergistic effect of a faster Vortex compared to a control group using the same weight of a foaming agent having an average particle diameter exceeding 10 µm can be exhibited. In the present invention, a Foaming Efficiency (FE) represented by Equation 2 below is newly introduced in order to represent a relationship between the implemented fast Vortex and the content of the foaming agent.

Specifically, the super absorbent polymer may have a Foaming Efficiency (FE) according to Equation 2 below of 37.0 or less, 36.0 or less, 35.0 or less, 34.0 or less, 33.8 or less, or 33.5 or less. At this time, a lower limit of the Foaming Efficiency is not particularly limited. [Equation 2] $FE = {C}_{FA} + {PD}_{VT} \leq 37.0 ,$ wherein
C_{FA} is [content of encapsulated foaming agent used in step (i) (ppmw)] / 1000, and
PD_{VT} is an absorption rate for physiological saline according to a Vortex measurement method of the super absorbent polymer prepared in step (iii).

### <Article>

Another example of the present invention is an article comprising the above-described super absorbent polymer.

The above-described super absorbent polymer may be preferably included or used in various sanitary articles, for example, paper diapers for children, diapers for adults, or sanitary napkins, and may be particularly preferably applied to diapers for children/adults requiring a fast absorption rate.

Such sanitary articles may include configurations of conventional sanitary articles, except that the polyacrylic acid (salt)-based super absorbent polymer according to the present invention is included in an absorbent body.

In addition, the super absorbent polymer may be used without limitation in various articles other than sanitary articles, for example, absorbent articles, soil water retaining agents, water stopping materials for civil engineering and construction, sheets for raising seedlings, freshness preserving agents, materials for fomentation, electrical insulators, oral or dental articles, and cosmetic or skin articles.

Hereinafter, the present invention will be described in detail through Examples. However, the following Examples are only illustrative of the present invention, and the present invention is not limited by the following Examples.

### [Preparation Example]

As an encapsulated foaming agent used in Examples, encapsulated foaming agent A (Dongjin Semichem, MS-140DSS) was prepared, in which a core was iso-pentane, a shell was made of a copolymer of acrylonitrile, methacrylonitrile, and methyl methacrylate, and a content of the core was 25% by weight based on 100% by weight of the total encapsulated foaming agent.

A diameter of the encapsulated foaming agent A was measured using a laser diffraction particle size analyzer (Malvern, Mastersizer 3000+). After measurement, a D50 (diameter of particles corresponding to 50% of cumulative distribution) value was calculated as an average particle size. The average particle diameter of the encapsulated foaming agent A was 8.5 µm, and particle distribution values were D10 (diameter of particles corresponding to cumulative 10%): 2.6 µm, D50: 8.5 µm, and D90 (diameter of particles corresponding to cumulative 90%): 38.7 µm. Here, D10, D50, and D90 values mean particle sizes (µm) corresponding to 10%, 50%, and 90%, respectively, based on a particle size cumulative distribution curve generated from laser diffraction particle size analysis.

In addition, an expansion initiation temperature (Ts) and a maximum foaming temperature (Tmax) of the encapsulated foaming agent A were measured using a Thermomechanical Analyzer (TMA, Mettler Toledo SDTA 2+). At this time, analysis conditions were analyzed under a temperature increase condition of 5 to 20 °C/min from 50 to 300 °C. The expansion initiation temperature of the encapsulated foaming agent measured as described above was 95 °C, and the maximum foaming temperature was 110 to 120 °C. In addition, a moisture content of the encapsulated foaming agent A was less than 2%.

### [Example 1]

In a 3L glass container equipped with a stirrer and a thermometer, 500 g of acrylic acid, 600 ppmw of ethylene glycol diglycidyl ether as an internal cross-linking agent (based on 100 parts by weight of acrylic acid), and 80 ppmw of diphenyl(2,4,6-trimethylbenzoyl)-phosphine oxide as a photo-polymerization initiator (based on 100 parts by weight of acrylic acid) were added and dissolved, and then 660 g of a 31.5% caustic soda solution was added to prepare a water-soluble unsaturated monomer aqueous solution (degree of neutralization: 75 mol%; solid content: 43.5% by weight). When the temperature of the water-soluble unsaturated monomer aqueous solution rose due to heat of neutralization and reached 40 °C, this mixture was placed in a square container (width 60 cm, length 60 cm) containing 1600 ppmw of sodium persulfate as a thermal polymerization initiator (based on 100 parts by weight of acrylic acid ), 500 ppmw of the encapsulated foaming agent A of the Preparation Example (average particle diameter before expansion: 8.5 µm, expansion initiation temperature: 95 °C) (based on 100 parts by weight of acrylic acid), and 200 ppmw of SDS (based on 100 parts by weight of acrylic acid), and then UV polymerization was performed by irradiating ultraviolet rays (irradiation dose: 10 mV/cm²) for 1 minute to obtain a hydrogel polymer sheet.

The obtained hydrogel polymer sheet was passed through a chopper having a hole size of 16 mm to prepare crumbs.

Next, the crumbs were dried in an oven capable of shifting air volume up and down. The drying was performed in multiple stages, and specifically, was performed using an air flow oven at 170 °C for 30 minutes (up flow 5 minutes - down flow 5 minutes - up flow 5 minutes - down flow 5 minutes - up flow 5 minutes - down flow 5 minutes). The dry polymer obtained through the drying process was pulverized using a 1 mm Fitz mill (Fritsch, Pulverisette 19), and classified with an ASTM standard sieve cassette (1 mm trapezoidal perforation) to obtain a base resin having a particle size of 150 to 850 µm. At this time, a weight ratio of the base resin having a particle diameter of less than 150 µm removed by classification relative to 100% by weight of the entire pulverized base resin powder was defined as an 'amount of generated fine particles', and the amount of generated fine particles measured in the base resin of Example 1 was 20% by weight.

Thereafter, based on the particle size of the base resin obtained by classification, it was classified into a first base resin (BR1) having a particle size of 600-850 µm, a second base resin

(BR2) having a particle size of 300 µm or more and less than 600 µm, and a third base resin (BR3) having a particle size of 150 µm or more and less than 300 µm, and surface cross-linking was performed after adjusting to have a weight ratio of BR1 : BR2 : BR3 = 10 : 70 : 20. A surface treatment solution containing 6 parts by weight of water, 3 parts by weight of methanol, 0.3 parts by weight of aluminum sulfate, and 0.05 parts by weight of ethylene glycol diglycidyl ether (EGDGE) was evenly mixed with respect to 100 parts by weight of the prepared base resin, and then supplied to one surface cross-linking reactor, and a surface cross-linking reaction of the base resin was performed at 130 °C for 40 minutes. After surface cross-linking, 0.07 parts by weight of fumed silica was mixed to obtain the super absorbent polymer of Example 1.

### [Examples 2 to 5]

Super absorbent polymer particles of Examples 2 to 5 were prepared in the same manner as in Example 1, except that the content of the encapsulated foaming agent A was changed as shown in Table 1 below.

### [Comparative Examples 1 to 3]

Super absorbent polymers of Comparative Examples 1 to 3 were prepared in the same manner as in Example 1, respectively, except that encapsulated foaming agent B (Dongjin Semichem, MS-140DS, average particle diameter before expansion: 15 µm, expansion initiation temperature: 90 °C, maximum foaming temperature: 115-130 °C) was used instead of encapsulated foaming agent A, and the content thereof was changed as shown in Table 1 below.

### [Evaluation of Physical Properties]

Physical properties were evaluated as follows using the super absorbent polymer particles prepared in Examples 1 to 5 and Comparative Examples 1 to 3, and the results are shown in Table 1 below.

### (1) Centrifugal Retention Capacity (CRC)

Retention capacity by absorption capacity under no load of the super absorbent polymers of Examples and Comparative Examples was measured according to European Disposables and Nonwovens Association (EDANA) standard EDANA WSP 241.2.

Specifically, the absorbent resin W₀(g) (approximately 0.2 g) obtained through each of the examples and comparative examples was uniformly placed in a non-woven bag, sealed, and then immersed in a saline solution (0.9 wt%) at room temperature. After 30 minutes, water was removed from the bag for 3 minutes using a centrifuge at 250 G, and the mass W₂(g) of the bag was measured. In addition, after performing the same operation without using the resin, a mass W₁(g) at that time was measured.

CRC (g/g) was calculated according to Equation 3 below using each obtained mass. [Equation 3] $CRC \left(g/g\right) = \left\{\left[{W}_{2}\left(g\right)-{W}_{1}\left(g\right)-{W}_{0}\left(g\right)\right]/{W}_{0}\left(g\right)\right\}$

### (2) Absorbency Under Pressure (AUP)

Absorbency Under Pressure (AUP) of 0.7 psi was measured for the super absorbent polymers of Examples and Comparative Examples according to the method of European Disposables and Nonwovens Association (EDANA) standard EDANA WSP 242.3-10.

First, a stainless steel 400 mesh wire mesh was mounted on a bottom of a plastic cylinder having an inner diameter of 60 mm. Under conditions of room temperature and 50% humidity, super absorbent polymer WO(g) was uniformly sprayed on the wire mesh, and a piston capable of uniformly further applying a load of 0.7 psi thereon had an outer diameter slightly smaller than 60 mm and made no gap with an inner wall of the cylinder and ensured that up and down movement was not hindered. At this time, a weight W3(g) of the device was measured.

A glass filter having a diameter of 90 mm and a thickness of 5 mm was placed inside a petri dish having a diameter of 150 mm, and physiological saline composed of 0.9% by weight sodium chloride was made to be at the same level as an upper surface of the glass filter. One filter paper having a diameter of 90 mm was placed thereon. The measuring device was placed on the filter paper, and the liquid was absorbed under load for 1 hour. After 1 hour, the measuring device was lifted, and its weight W4(g) was measured. Absorbency under pressure (g/g) was calculated according to Equation 4 below using each obtained mass. [Equation 4] $AUP \left(g/g\right) = \left[W4\left(g\right)-W3\left(g\right)\right] / W 0 \left(g\right)$

### (3) Permeability

Permeability was measured under a load of 0.3 psi using a 0.9% saline solution by a method described in literature (Buchholz, F.L. and Graham, A.T., "Modern Superabsorbent Polymer Technology," John Wiley & Sons (1998), page 161).

More specifically, 0.2 g of particles having a particle diameter of 300 to 600 µm among the super absorbent polymers prepared in Examples and Comparative Examples were taken and put into a cylinder (Φ 20 mm). At this time, one end of the cylinder includes a stopcock, and an upper limit line and a lower limit line are marked. The upper limit line of the cylinder is marked at a position when 40 mL of (saline) solution is filled, and the lower limit line is marked at a position when 20 mL of (saline) solution is filled.

50 g of a 0.9% saline (NaCl) solution was added to the cylinder with the stopcock closed and left for 30 minutes. Next, if necessary, additional saline solution is added so that a level of the saline solution reaches the upper limit line of the cylinder. Next, a load of 0.3 psi was applied to the cylinder containing the saline-absorbed super absorbent polymer and left for 1 minute. Thereafter, the stopcock located under the cylinder was opened, and a time for the 0.9% saline solution to pass from the upper limit line marked on the cylinder to the lower limit line was measured. All measurements were performed under a temperature of 24±1 °C and a relative humidity of 50±10%.

For each super absorbent polymer sample (TS) and a control group (T0) without the super absorbent polymer, the time passing from the upper limit line to the lower limit line was measured, and then permeability was calculated according to Equation 5 below. [Equation 5] $Liquid Permeability = Permeability \left(sec\right) = {T}_{S} - {T}_{0}$

T_{S} means a time taken for a 0.9 wt% saline solution to permeate the super absorbent polymer under a pressure of 0.3 psi after preparing a super absorbent polymer absorbing saline by swelling 0.2 g of super absorbent polymer powder with a 0.9 wt% saline (NaCl) solution for 30 minutes, and T₀ means a time taken for a 0.9% saline solution to permeate under a pressure of 0.3 psi without the super absorbent polymer.

### (4) Absorption Rate (Vortex time)

An absorption rate (Vortex time) of the super absorbent polymer obtained in Examples and Comparative Examples was measured by the following method.

First, ① 50 mL of 0.9% saline was put into a 100 mL beaker with a flat bottom using a 100 mL Measuring Cylinder. ② Next, after placing the beaker to be in the center of a magnetic stirrer, a magnetic bar (diameter 8 mm, length 30 mm) was put into the beaker. ③ Thereafter, the stirrer was operated so that the magnetic bar was stirred at 600 rpm, and the lowest part of a vortex generated by stirring touched the upper part of the magnetic bar. ④ After confirming that a temperature of the saline in the beaker reached 24.0 °C, 2±0.01 g of a super absorbent polymer sample was added while simultaneously operating a stopwatch, and a time until the vortex disappeared and a liquid surface became completely horizontal was measured in seconds (sec), which was defined as the absorption rate.

### (5) Pulverizing Ratio (PR)

For the super absorbent polymers obtained in Examples and Comparative Examples, a Pulverizing Ratio (PR) according to Equation 1 below was calculated and shown in Table 1 below. [Equation 1] $PR = {BR}_{FP} \times {PD}_{VT} \leq 750 ,$ wherein
BR_{FP} means a percentage (BR_{FP}) of an amount of generated fine particles having a particle diameter of less than 150 µm relative to 100% by weight of the entire base resin powder pulverized during preparation of the base resin, and PD_{VT} is an absorption rate (Vortex time) of the prepared super absorbent polymer for physiological saline.

### (6) Foaming Efficiency

For the super absorbent polymers obtained in Examples and Comparative Examples, Foaming Efficiency (FE) according to Equation 2 below was calculated and shown in Table 1 below. [Equation 2] $FE = {C}_{FA} + {PD}_{VT} \leq 37.0 ,$ wherein
C_{FA} is [content of encapsulated foaming agent (ppmw)] / 1000, and
PD_{VT} is an absorption rate (Vortex time) of the prepared super absorbent polymer for physiological saline.

**[Table 1]**

| | Encapsulated Foaming Agent | | | Base resin | Super Absorbent Polymer After Surface Cross-linking | | | | Pulverizing Ratio (PR = BR_{FP} × PD_{VT}) (%·sec) | Foaming Efficiency (FE = C_{FA} + PD_{VT}) (unitless) |
|---|---|---|---|---|---|---|---|---|---|---|
| | Type | Before Expansion Average particle diameter (*µ*m) | Content (ppmw) | Fine particles Amount generated (BR_{FP}, wt%) | CRC (g/g) | AUP (g/g) | Permeability (sec) | Vortex (PDvr sec) | | |
| Example 1 | A | 8.5 | 500 | 20 | 37.0 | 21.0 | 120 | 33 | 660 | 33.5 |
| Example 2 | A | 8.5 | 1000 | 20 | 38.4 | 17.2 | 102 | 32 | 640 | 33.0 |
| Example 3 | A | 8.5 | 1500 | 22 | 37.8 | 15.8 | 155 | 30 | 660 | 31.5 |
| Example 4 | A | 8.5 | 2000 | 24 | 36.4 | 15.6 | 156 | 27 | 648 | 29.0 |
| Example 5 | A | 8.5 | 3000 | 24 | 36.2 | 14.0 | 240 | 25 | 600 | 28.0 |
| Comparative Example 1 | B | 15 | 1000 | 20 | 37.3 | 21.2 | 70 | 39 | 780 | 40 |
| Comparative Example 2 | B | 15 | 1500 | 22 | 37.9 | 21.0 | 80 | 39 | 858 | 40.5 |
| Comparative Example 3 | B | 15 | 3000 | 26 | 38.6 | 17.9 | 108 | 35 | 936 | 38.0 |

As shown in Table 1 above, in the case of Comparative Examples 1 to 3 using an encapsulated foaming agent having an average particle diameter exceeding 10 µm, it was found that the absorption rate (Vortex) of the super absorbent polymer was reduced compared to Examples 2-3 and 5 using the same amount of the foaming agent.

In contrast, Examples 1 to 5 using a predetermined amount of an encapsulated foaming agent having an average particle diameter of 10 µm or less not only exhibited a fast absorption rate effect of the final super absorbent polymer, but were also found to be significantly superior to Comparative Examples 1 to 3 in terms of Pulverizing Ratio (PR) and Foaming Efficiency (FE) characteristics. In addition, during the preparation of the base resin, the amount of generated fine particles was similar to or reduced compared to Comparative Examples 1-3.

It was confirmed that this is because pores of an appropriate size (for example, pore size, porosity, and/or continuous/preserved pore structure) relative to the particle size of the super absorbent polymer are uniformly formed through control of the average particle diameter of the encapsulated foaming agent, thereby achieving a fast absorption rate (Vortex). In addition, it was found that through control of the average particle diameter and content of the encapsulated foaming agent, a decrease in the surface area of pores lost as fine particles due to shaving of foaming edges during the manufacturing process is small, and the amount of generated fine particles itself is also reduced.

From the above results, it was found that the present invention significantly improves the absorption rate (Vortex) of the super absorbent polymer by optimizing the average particle diameter (D50) and content of the encapsulated foaming agent, while exhibiting a relatively small amount of generated fine particles compared to the corresponding absorption rate level. In addition, major absorption capacities (for example, CRC and AUP) of the super absorbent polymer secured physical properties equal to or higher than those of Comparative Examples using an encapsulated foaming agent having an average particle diameter exceeding 10 µm, and although liquid permeability was somewhat lowered compared to Comparative Examples, it was still maintained within a range of typical physical properties of the super absorbent polymer.

## Claims

1. A polyacrylic acid (salt)-based super absorbent polymer comprising a base resin and a surface cross-linking layer formed on a surface of the base resin, wherein:
based on 100 parts by weight of total super absorbent polymer particles, particles having an average particle diameter of 150 µm or more and less than 300 µm are included in an amount of 25 parts by weight or less;
a centrifugal retention capacity (CRC) measured according to EDANA WSP 241.2 is 36.0 g/g or more; and
an absorption rate for physiological saline according to a Vortex measurement method is 34 seconds or less.

2. The super absorbent polymer of Claim 1, wherein
an absorbency under pressure (0.7 AUP) for 1 hour under 0.7 psi for physiological saline (0.9 wt% sodium chloride aqueous solution) measured according to a method of EDANA WSP 242.3-10 is 10.0 g/g or more.

3. The super absorbent polymer of Claim 1, wherein
a liquid permeability is 300 seconds or less.

4. The super absorbent polymer of Claim 1, wherein
the base resin is
formed by cross-linking polymerization of an acrylic acid-based monomer having at least a partially neutralized acidic group and an internal cross-linking agent in the presence of an encapsulated foaming agent having an average particle diameter (D50) of 4 to 10 µm.

5. The super absorbent polymer of Claim 1, further comprising
a silica layer formed on the surface cross-linking layer.

6. An article comprising the super absorbent polymer according to any one of Claims 1 to 5.

7. The article of Claim 6, wherein
the article is at least one selected from an absorbent article, a sanitary article, a soil water retaining agent, a water stopping material for civil engineering and construction, a sheet for raising seedlings, a freshness preserving agent, a material for fomentation, and an electrical insulator.

8. A method for preparing a polyacrylic acid (salt)-based super absorbent polymer, comprising: (i) a step of cross-linking polymerizing an acrylic acid-based monomer having at least a partially neutralized acidic group in the presence of an encapsulated foaming agent having an average particle diameter (D50) of 4 to 10 µm, an internal cross-linking agent, and a polymerization initiator to form a hydrogel polymer;
(ii) a step of drying, pulverizing, and classifying the hydrogel polymer to obtain a base resin powder; and
(iii) a step of mixing a base resin, in which particles having an average particle diameter of 150 µm or more and less than 300 µm are included in an amount of 25 parts by weight or less based on 100 parts by weight of the obtained base resin powder, with a surface cross-linking composition containing a surface cross-linking agent, followed by heat treatment to prepare a super absorbent polymer having a surface cross-linking layer formed on the base resin.

9. The method of Claim 8, wherein
the encapsulated foaming agent
comprises a core containing a hydrocarbon; and
a shell surrounding the core and formed of a thermoplastic resin, and
has an expansion initiation temperature of 90 to 100 °C.

10. The method of Claim 8, wherein
the encapsulated foaming agent is included in an amount of 100 to 3,000 ppmw based on 100 parts by weight of the acrylic acid-based monomer.

11. The method of Claim 8, wherein
an amount of generated fine particles having a particle diameter of less than 150 µm based on 100% by weight of the total base resin powder pulverized in step (ii) is 25% by weight or less.

12. The method of Claim 8, wherein
the super absorbent polymer has a Pulverizing Ratio (PR) according to Equation 1 below of 750 %·sec or less: [Equation 1] $PR = {BR}_{FP} \times {PD}_{VT} \leq 750 ,$
wherein
BR_{FP} is a percentage of an amount of fine particles generated having a particle diameter of less than 150 *µ*m relative to 100% by weight of the total base resin powder pulverized in step (ii), and
PD_{VT} is an absorption rate for physiological saline according to a Vortex measurement method of the super absorbent polymer prepared in step (iii).

13. The method of Claim 8, wherein
the super absorbent polymer has a Foaming Efficiency (FE) according to Equation 2 below of 37.0 or less: [Equation 2] $FE = {C}_{FA} + {PD}_{VT} \leq 37.0 ,$
wherein
C_{FA} is [content of encapsulated foaming agent used in step (i) (ppmw)] / 1000, and
PD_{VT} is an absorption rate for physiological saline according to a Vortex measurement method of the super absorbent polymer prepared in step (iii).

14. The method of Claim 8, wherein
the preparation method further comprises
(iv) mixing the super absorbent polymer having the surface cross-linking layer formed thereon with silica.

15. The method of Claim 14, wherein
the silica is included in an amount of 0.01 to 5 parts by weight based on 100 parts by weight of the super absorbent polymer.
